(19) Europäisches Patentamt

European Patent Office

Office européen des brevets

(11) **EP 1 003 292 B1**

(12) **FASCICULE DE BREVET EUROPEEN**

(45) Date de publication et mention
de la délivrance du brevet:
**20.07.2005 Bulletin 2005/29**

(51) Int Cl.⁷: **H04B 3/46**, H04M 3/22

(21) Numéro de dépôt: **99402764.7**

(22) Date de dépôt: **05.11.1999**

(54) **Procédé en vue de l'extraction de signaux électriques, sans coupure de la paire de lignes**

Verfahren zur Extraktion von elektrischen Signalen ohne Unterbrechung des Leitungspaares

Method for extracting electrical signals without disrupting the pair of lines

(84) Etats contractants désignés:
**DE GB**

(30) Priorité: **18.11.1998 FR 9814487**

(43) Date de publication de la demande:
**24.05.2000 Bulletin 2000/21**

(73) Titulaire: **FRANCE TELECOM**
**75015 Paris (FR)**

(72) Inventeur: **Auvolat, Jean-Paul**
**60160 Montataire (FR)**

(74) Mandataire: **Peaucelle, Chantal et al**
**Cabinet ARMENGAUD AINE**
**3, avenue Bugeaud**
**75116 Paris (FR)**

(56) Documents cités:
**US-A- 5 425 052      US-A- 5 504 736**

**Description**

La présente invention est relative à un procédé et à un dispositif pour la mise en oeuvre de ce procédé permettant d'assurer la maintenance sur un réseau de transmission de données sans coupure physique et momentanée du réseau, ces données étant en outre acheminées sur un réseau à deux fils.

Elle vise plus particulièrement à permettre la vérification et la surveillance des protocoles de communication (analyse de signaux, de perturbations, visualisation à l'oscilloscope, analyse sur plate-forme "*LABVIEW*", analyse de trames, analyse de protocole (Transpac, Internet...), comptage d'erreurs, qualification, extraction du CRC, observations/surveillance, niveaux, sauts de niveaux, coupures et microcoupures...) échangés entre deux installations reliées par un réseau de transmission de données à deux fils travaillant en mode "*Half Duplex*" et/ou "*Full Duplex*" sans recours à un transformateur différentiel, tout en garantissant un affaiblissement en ligne négligeable de l'ordre de notamment 0,5 db/600 ohms (Impédance à adapter au débit de la ligne), tant dans une technologie analogique que numérique.

Les procédés connus ont été développés pour des réseaux de transmission de données basés sur une architecture à 4 fils, 2 fils étant réservés pour l'émission, 2 fils étant réservés pour la réception. Avec ce type de technologie, des appareils de mesure comportant une entrée Haute Impédance permettent l'extraction des signaux et ceci sans perturbation des échanges en cours. Suivant leur branchement (en parallèle sur la paire Emission ou en parallèle sur la paire Réception), l'observation se fera sur l'émission des données ou sur leur réception.

Le document US-5 425 052 divulgue un système pour extraire et séparer des signaux respectifs d'une liaison numérique « Full Duplex ».

On comprend aisément que dans une technologie à deux fils, que ce soit en analogique ou en numérique, les deux fils véhiculent à la fois un message d'émission et de réception, il est impossible d'introduire sans couper le réseau un appareil de surveillance de protocole. Or à ce jour, tous les appareils connus requièrent une interruption, aussi brève soit-elle, du réseau pour brancher ou débrancher le dispositif entre les installations à surveiller.

La présente invention vise à pallier ces inconvénients en proposant un procédé et un dispositif pour la mise en oeuvre de ce procédé, qui autorise l'acquisition de signaux et leur interprétation ultérieure, sans coupure de la ligne dans un réseau de transmission de données à 2 fils.

A cet effet, le procédé en vue de l'extraction de signaux électriques issus des deux extrémités d'une liaison 2 fils entre deux installations échangeant des données, se caractérise en ce qu'on raccorde une sonde comportant une cellule d'affaiblissement de part et d'autre d'un point de coupure situé sur la paire de lignes, puis on isole les connexions ainsi établies de manière à transférer les signaux dans la cellule d'affaiblissement, on active la cellule d'affaiblissement par retrait progressif des composants actifs, on prélève des signaux en haute impédance aux deux extrémités de la cellule d'affaiblissement, et on obtient en sortie de la cellule d'affaiblissement, après un calcul analogique basé sur une soustraction des signaux et une multiplication par une constante directement liée à la valeur de l'affaiblissement de la cellule, des signaux images des signaux électriques envoyés par l'une ou l'autre des extrémités de la paire de lignes.

D'autres caractéristiques et avantages de la présente invention ressortiront de la description faite ci-après, en référence aux dessins annexés qui en illustrent un exemple de réalisation dépourvu de tout caractère limitatif. Sur les figures :

- la figure 1 est un schéma illustrant un exemple d'une paire de lignes reliant deux installations échangeant des informations ou données de types analogiques (liaisons téléphoniques, liaisons louées...) ou numériques (Numeris, Transfix, HDSL...), cette paire étant pourvue d'un point de coupure ;

- la figure 2 illustre le circuit électronique de principe d'une cellule d'affaiblissement ;

- la figure 3 illustre le circuit électronique de principe d'une sonde de prélèvement de signaux ;

- la figure 4 illustre le branchement d'une sonde de prélèvement sur la paire de lignes visée à la figure 1, la sonde et la cellule d'affaiblissement étant inactives ;

- la figure 5 illustre le branchement d'une sonde de prélèvement selon un autre mode de réalisation, sur la paire de lignes visée à la figure 1, la sonde et la cellule d'affaiblissement étant inactives ;

- la figure 6 illustre le branchement d'une sonde de prélèvement sur la paire de lignes visée à la figure 1, le point de coupure étant ouvert de manière à faire transiter les signaux dans la cellule d'affaiblissement, sans toutefois prélever ceux-ci ;

- la figure 7 illustre la dernière phase du branchement et dans cette configuration la sonde de prélèvement est active.

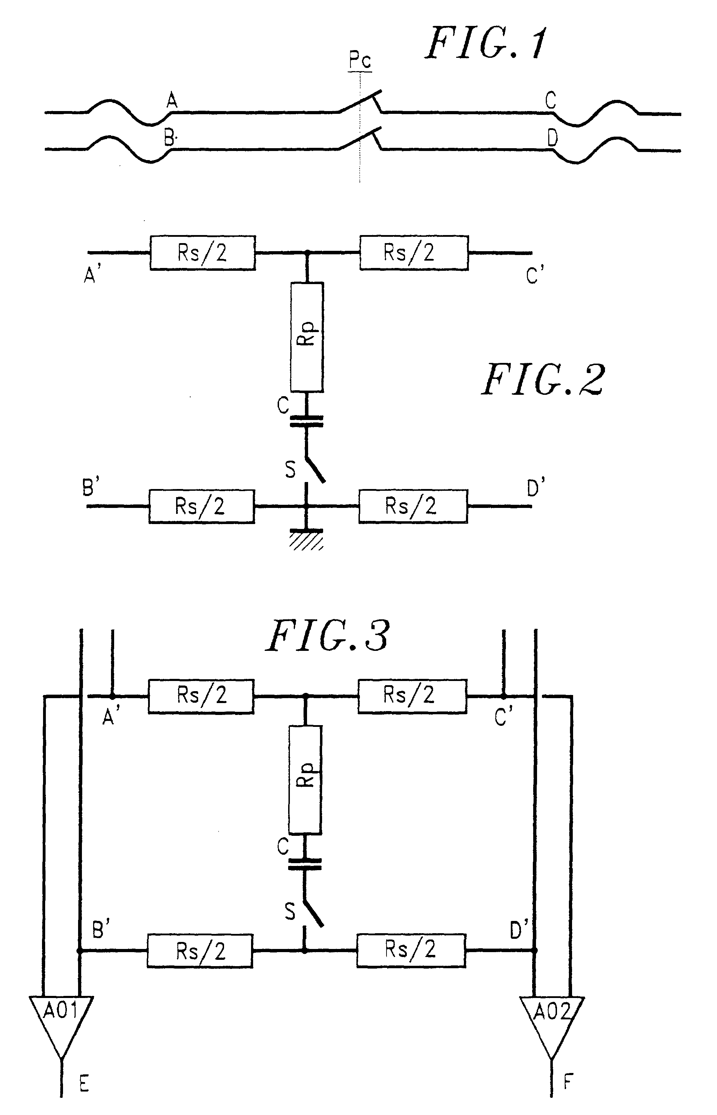

Selon un mode préféré de réalisation du procédé objet de l'invention, celui-ci consiste à raccorder un dispositif électronique sur une paire de lignes (se référer à la figure 1) reliant deux installations ou deux appareils échangeant des informations ou données sur un réseau à deux fils, les points de connexion de ces lignes aux installations étant représentés par A, B, C, D, et comportant un point de coupure Pc figuré schématiquement sensiblement entre les points A, B d'une part et C, D d'autre part, mais pouvant suivant le type d'installation être reporté au sein d'une installation plutôt que vers l'autre. Sur la figure 1, il est important de noter que le point de coupure Pc est fermé, les informations étant échangées sur la paire de lignes, dans un sens ou dans un autre, entre les deux installations.

Le dispositif ou circuit électronique comporte, d'une part une cellule d'affaiblissement (cf. figure 2), et d'autre part une sonde de prélèvement comportant la cellule d'affaiblissement (cf. figure 3).

En se reportant à la figure 2, la cellule d'affaiblissement comporte 4 points de connexion A', B', C', D' reliés entre eux par l'intermédiaire d'un pont comportant, d'une part des résistances Rs dans les branches séries, et d'autre part une résistance Rp, au moins un condensateur C et un interrupteur S qui permet l'activation de cette cellule.

On peut noter les relations liant Rs et Rp :

$$Rs = Z_0 \, (1-10^{-\alpha/20})$$

$$Rp = (Z_0-Rs) \, (Z_0+Rs) \, / \, 2Rs$$

avec $\alpha$ correspondant à la valeur de l'affaiblissement imposé par l'utilisateur au circuit, et dans notre cas $\alpha = 0,5$ db, et avec $Z_0$ correspondant à l'impédance nominale de la ligne et de la cellule d'affaiblissement, et dans notre cas $Z_0 = 600 \, \Omega$.

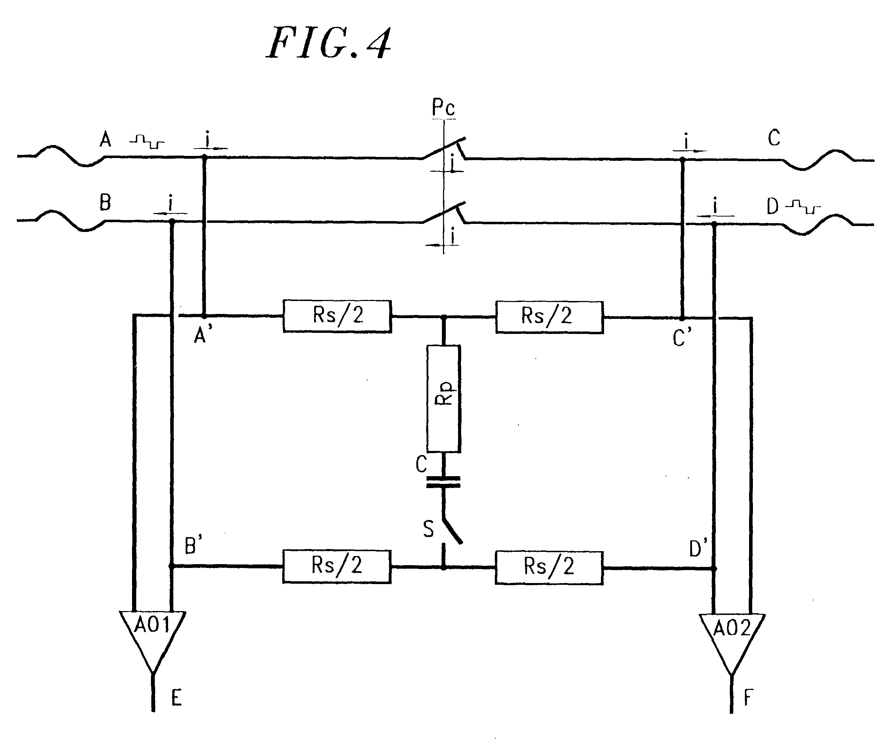

Les points A', B', C', D' représentent les points de connexion de la sonde comportant la cellule d'affaiblissement sur la paire de lignes. Ces points sont reliés d'une part aux entrées inverseuses et non inverseuses de deux amplificateurs opérationnels représentés A01 et A02 sur la figure 3, ou de deux transformateurs, de manière à conformer un convertisseur numérique et/ou analogique différentiel permettant l'extraction de signaux à haute impédance, et d'autre part aux points de connexion A, B, C, D de la paire de lignes dont on veut prélever des signaux (cf. figure 4).

La première phase du procédé de maintenance du réseau de transmission consiste donc à brancher en parallèle, de part et d'autre du point de coupure Pc prévu, d'une part sur la ligne AC, et d'autre part sur la ligne BD, les 4 points de connexion A', B', C', D' provenant de la sonde et de la cellule d'affaiblissement.

On peut remarquer que les points de connexion A', B', C', D' correspondent respectivement à A, B, C, D.

Dans cette phase, le point de coupure Pc est fermé, les courants i circulent normalement entre (A,C) d'une part, et (D,B) d'autre part la ligne (A,C) correspondant à une émission de données par exemple, tandis que la ligne (D,B) correspond à une réception de données par exemple.

Etant donné les différentes valeurs données aux résistances Rs de la cellule d'affaiblissement, les signaux ne sont pas affectés par le branchement de la sonde.

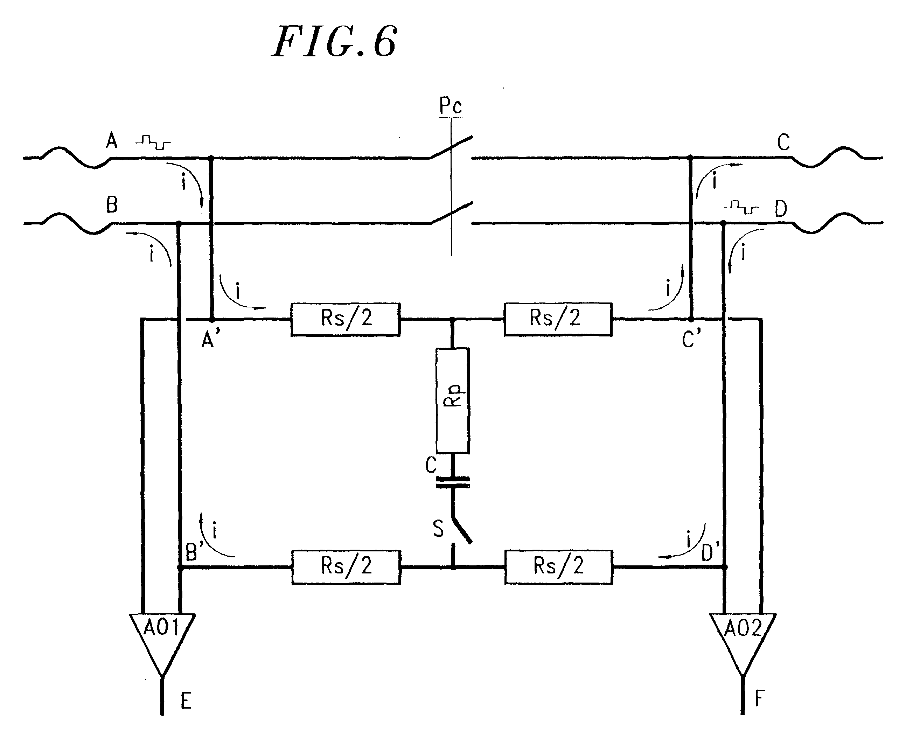

La seconde étape du procédé (se reporter à la figure 6) consiste à ouvrir le point de coupure Pc (l'interrupteur S de la cellule d'affaiblissement étant maintenu ouvert également) de manière à dériver les courants i, d'une part de A en A', puis de A' en C', et enfin de C' en C, et d'autre part de D en D', puis de D' en B, et enfin de B' en B, au sein des 4 résistances Rs/2.

Dans le schéma de principe illustré à la figure 6 du circuit électronique, la valeur de Rs/2 est négligeable devant la résistance des lignes (A,C) et (D,B).

Communément, le point de coupure Pc peut se trouver au sein d'une réglette de raccordement à l'intérieur du standard, à l'une ou l'autre des extrémités situées dans les installations, ce point de coupure étant appelé dans la terminologie classique des opérateurs "*un bouchon ou* une *sucette*".

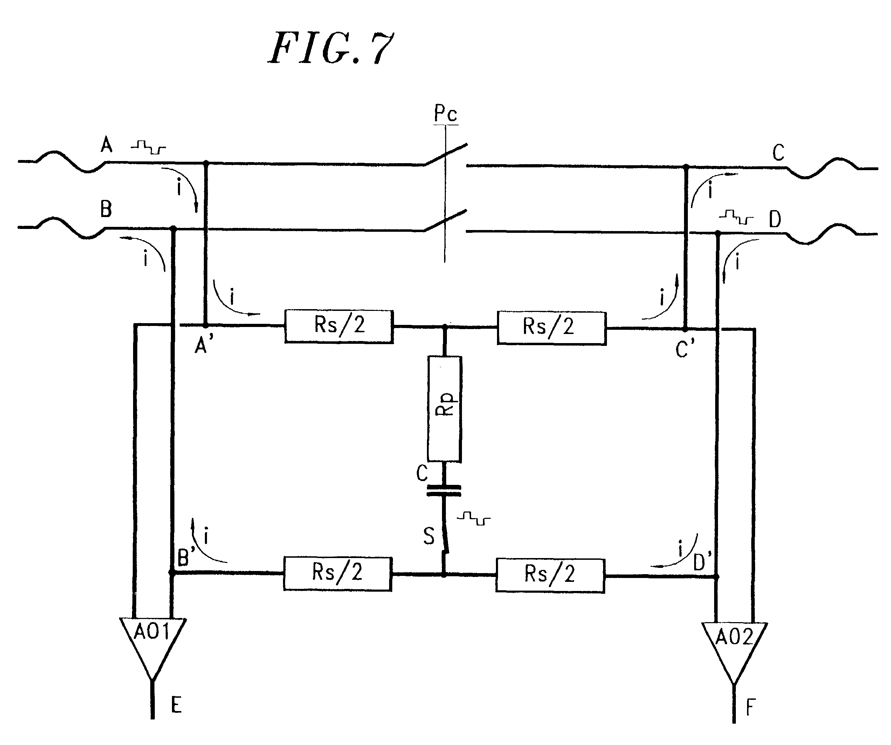

L'étape suivante du procédé consiste à activer la ligne d'affaiblissement modifiée par retrait progressif des composants actifs, laissant ainsi la valeur nominale de la ligne d'affaiblissement s'insérer en série dans la liaison, dans notre cas 3 db. Cette étape est schématiquement illustrée à la figure 7, l'interrupteur S est fermé, la sonde devient active pour les signaux alternatifs variables et elle est toujours transparente pour le courant de ligne, le condensateur C ne laissant pas passer la composante continue du signal.

Dans ce cas de figure, il est possible d'obtenir au niveau des points E et F, des signaux de Haute Impédance, qui proviennent d'un calcul analogique ou numérique basé sur une soustraction des signaux et une multiplication par une constante directement liée à la valeur de l'affaiblissement de la cellule, chacun des deux signaux provenant des points de connexion A en A', B en B' d'une part, C en C', D en D' d'autre part, par un facteur tenant compte du gain des amplificateurs opérationnels et des différentes valeurs données aux résistances Rs et Rp. On extrait ainsi en E et en F des images des signaux envoyés par l'une des deux extrémités de la paire de lignes reliant les deux installations.

Le rétablissement de la liaison s'effectue par un retrait de la cellule d'affaiblissement et de la sonde. Les différentes phases sont réalisées en procédant en sens inverse : on ouvre l'interrupteur S, on ferme le point de coupure Pc, on déconnecte les 4 points de connexion A', B', C' , D' provenant de la sonde des 4 points respectifs A, B, C, D se trouvant de part et d'autre du point de coupure Pc sur la paire de lignes.

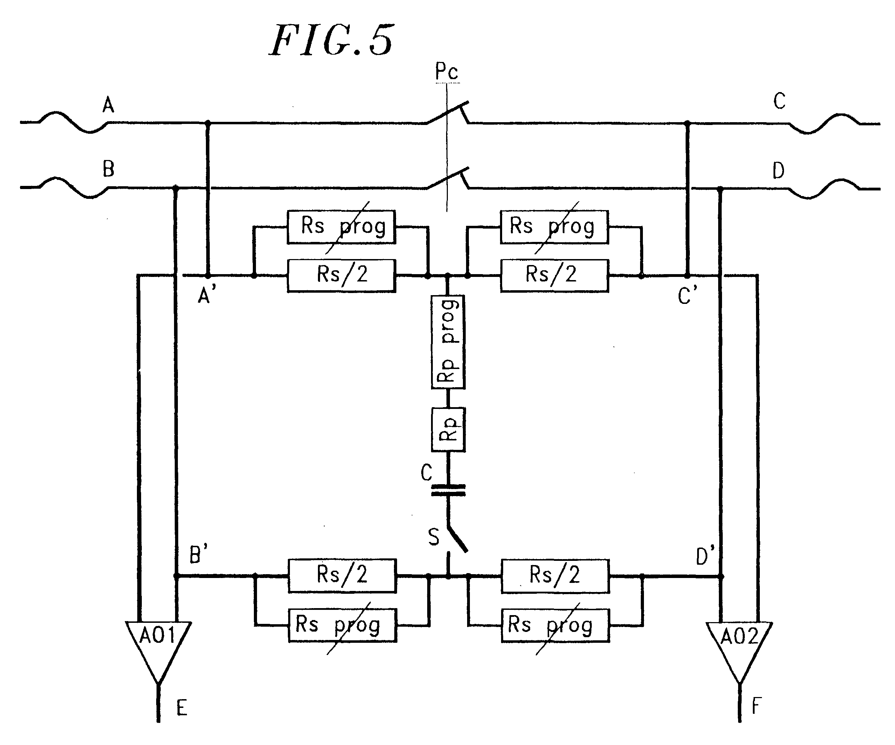

En variante représentée à la figure 5, les différentes résistances Rs et Rp de la cellule active d'affaiblissement sont optimisées par adjonction de résistances programmables, respectivement $Rs_{prog}$ et $Rp_{prog}$, afin d'insérer progressivement la cellule sur la paire de lignes. Dans ce cas, $Rs_{prog}$ est incrémentée de 0 à 2 kΩ, tandis que $Rp_{prog}$ est décrémentée de 10 kΩ à 0 Ω. Cette variante dont le circuit simplifié est représenté à la figure 5 est particulièrement destinée notamment à une technologie numérique.

La présente invention telle que décrite précédemment offre de multiples avantages car elle garantit qu'après insertion de la sonde, les signaux électriques issus des deux extrémités de la liaison 2 fils sont extraits et mis à disposition avec des niveaux et des caractéristiques électriques identiques à ceux qu'ils auraient eus, si la liaison avait été coupée et adaptée en impédance à ce point de mesure.

Il demeure bien entendu que la présente invention n'est pas limitée aux exemples de réalisation décrits et représentés ci-dessus, mais qu'elle en englobe toutes les variantes si celles-ci entrent dans le cadre de l'invention définie par les revendications annexées.

**Revendications**

1. Procédé en vue de l'extraction de signaux électriques issus des deux extrémités d'une liaison 2 fils entre deux installations échangeant des données, **caractérisé en ce qu'**on raccorde une sonde comportant une cellule d'affaiblissement de part et d'autre d'un point de coupure (Pc) situé sur la paire de lignes, puis on isole les connexions ainsi établies de manière à transférer les signaux dans la cellule d'affaiblissement, on active la cellule d'affaiblissement par retrait progressif de composants actifs (Rs, Rp, $Rs_{prog}$, $Rp_{prog}$, C), on prélève des signaux en haute impédance aux deux extrémités (A', B', C', D') de la cellule d'affaiblissement, et on obtient en sortie de la cellule d'affaiblissement (E, F), après un calcul analogique basé sur une soustraction des signaux et une multiplication par une constante directement liée à la valeur de l'affaiblissement de la cellule, des signaux images des signaux électriques envoyés par l'une ou l'autre des extrémités de la paire de lignes (A, B, C, D).

2. Procédé selon la revendication 1, **caractérisé en ce que**, lors de la phase de raccordement de la sonde sur la paire de lignes, on connecte des points de connexion (A', B', C', D') issus de la cellule d'affaiblissement à des points de connexion (A,B) et (C, D), situés respectivement de part et d'autre du point de coupure (Pc), le point de coupure (Pc) étant, lors de cette opération, dans une position de circuit fermé.

3. Procédé selon la revendication 1, **caractérisé en ce que** la phase d'isolement s'effectue en ouvrant le circuit (Pc).

4. Procédé selon la revendication 1, **caractérisé en ce que** la phase d'activation de la cellule d'affaiblissement consiste à mettre en série les composants actifs (Rs, Rp, $Rs_{prog}$, $Rp_{prog}$, C) par la fermeture d'un circuit (S) situé au sein de la cellule d'affaiblissement de la sonde.

5. Sonde pour la mise en oeuvre du procédé selon l'une quelconque des revendications 1 à 4, **caractérisée en ce qu'**elle comporte des points de connexion sur une paire de lignes reliant deux installations, pour réaliser l'extraction de signaux émis à chaque extrémité de ladite paire de lignes, sans coupure de ligne.

6. Sonde selon la revendication 5, **caractérisée en ce qu'**elle comporte une cellule d'affaiblissement munie d'une pluralité de composants actifs (Rs, Rp, $Rs_{prog}$, $Rp_{prog}$, C) montés en pont ainsi qu'un convertisseur numérique et/ou analogique différentiel permettant l'extraction de signaux à haute impédance.

7. Sonde selon l'une des revendications 5 ou 6, **caractérisée en ce qu'**elle comporte des résistances ($Rs_{prog}$, $Rp_{prog}$), respectivement incrémentables et décrémentables selon un pas donné, de manière à permettre l'insertion progressive de la cellule d'affaiblissement sur la paire de lignes.

**Claims**

1. Method for the extraction of electrical signals coming from the two ends of a two wire connection between two installations exchanging data, **characterized in that** a probe comprising an attenuation cell is connected on either side of a cut-off point (Pc) situated on the pair of lines, then the connections established in this way are isolated so as to transfer the signals into the attenuation cell, the attenuation cell being activated by the gradual withdrawal of active components (Rs, Rp, $Rs_{prog}$, $Rp_{prog}$, C), high-impedance signals being taken off at the two ends (A', B', C', D') of the attenuation cell and, at the output of the attenuation cell (E, F), after an analogue calculation based on a subtraction of the signals and a multiplication by a constant directly linked to the attenuation value of the cell, video signals are obtained from the electrical signals sent by one or the other of the ends of the pair of lines (A, B, C, D).

2. Method according to claim 1, **characterized in that**, during the phase of connecting the probe on the pair of lines, connection points (A', B', C', D') originating from the attenuation cell are connected to connection points (A, B) and (C, D), respectively situated on either side of the cut-off point (Pc), the cut-off point (Pc) being in a closed circuit position during this operation.

**3.** Method according to claim 1, **characterized in that** the isolation phase is activated by opening the circuit (Pc).

**4.** Method according to claim 1, **characterized in that** the activation phase of the attenuation cell consists of connecting the active components (Rs, Rp, Rs$_{prog}$, Rp$_{prog}$, C) in series by closing a circuit (S) situated within the attenuation cell of the probe.

**5.** Probe for implementing the method according to any one of claims 1 to 4, **characterized in that** it comprises connection points on a pair of lines connecting two installations, in order to carry out the extraction of signals transmitted at each end of said pair of lines, without disconnecting the line.

**6.** Probe according to claim 5, **characterized in that** it comprises an attenuation cell equipped with a plurality of active components (Rs, Rp, Rs$_{prog}$, Rp$_{prog}$, C) in a bridge connection, together with a differential digital and/or analogue converter allowing the extraction of highimpedance signals.

**7.** Probe according to either one of claims 5 and 6, **characterized in that** it comprises resistances (Rs$_{prog}$, Rp$_{prog}$), which can be respectively incremented and decremented by a given step, so as to allow the gradual insertion of the attenuation cell on the pair of lines.

**Patentansprüche**

**1.** Verfahren zur Extraktion elektrischer Signale, die von den zwei Enden einer zweidrahtigen Verbindung zwischen zwei Einrichtungen stammen, die Daten austauschen, **gekennzeichnet durch**:

Anschließen einer Sonde, welche eine Dämpfungszelle zu beiden Seiten eines Trennungspunkts (Pc) umfaßt, der auf dem Leitungspaar angeordnet ist; danach
Trennen der so aufgebauten Verbindungen, um Signale in die Dämpfungszelle zu übertragen;
Aktivieren der Dämpfungszelle **durch** schrittweises Abschalten der aktiven Komponenten (Rs, Rp, Rs$_{prog}$, Rp$_{prog}$, C);
Entnehmen der Hochimpedanz-Signale an den zwei Enden (A', B', C', D') der Dämpfungszelle; und nach einer analogen Berechnung basierend auf einer Subtraktion der Signale und einer Multiplikation mit einer Konstanten, die direkt mit dem Dämpfungswert der Zelle verknüpft ist, Gewinnen von Spiegelsignalen der elektrischen Signale, die an dem einen oder dem anderen Ende des Leitungspaars (A, B, C, D) eingeleitet wurden, an den Ausgängen (E, F) der Dämpfungszelle.

**2.** Verfahren nach Anspruch 1, **dadurch gekennzeichnet, daß** während des Schritts des Anschließens der Sonde an das Leitungspaar Verbindungspunkte (A', B', C', D'), welche von der Dämpfungszelle stammen, mit Verbindungspunkten (A, B) und (C, D) verbunden werden, welche an den jeweiligen beiden Seiten des Trennungspunkts (Pc) angeordnet sind, wobei der Trennungspunkt (Pc) bei diesem Schritt die Schaltstellung eines geschlossenen Kreises einnimmt.

**3.** Verfahren nach Anspruch 1, **dadurch gekennzeichnet, daß** der Schritt des Trennens durch Öffnen des Schaltkreises (Pc) ausgeführt wird.

**4.** Verfahren nach Anspruch 1, **dadurch gekennzeichnet, daß** der Schritt der Aktivierung der Dämpfimgszelle darin besteht, daß die aktiven Komponenten (Rs, Rp, Rs$_{prog}$, Rp$_{prog}$, C) durch Schließen eines Schaltkreises (S) in Serie geschaltet werden, welcher im Inneren der Dämpfungszelle der Sonde angeordnet ist.

**5.** Sonde zum Ausführen des Verfahrens nach einem der Ansprüche 1 bis 4, **dadurch gekennzeichnet, daß** diese Verbindungspunkte umfaßt, die auf einem Leitungspaar liegen, welches zwei Einrichtungen verbindet, um die Extraktion von Signalen durchzufiihren, die von jedem Ende des Leitungspaars abgegeben werden, ohne die Leitung zu trennen.

**6.** Sonde nach Anspruch 5, **dadurch gekennzeichnet, daß** diese eine Dämpfungszelle mit einer Vielzahl aktiver Komponenten (Rs, Rp, Rs$_{prog}$, RP$_{prog}$, C), die in Brücke geschaltet sind, und einen digitalen und/oder analogen Differenz-Wandler, der die Extraktion von Hochimpedanzsignalen ermöglicht, umfaßt.

**7.** Sonde nach einem der Ansprüche 5 oder 6, **dadurch gekennzeichnet, daß** diese Widerstände (Rs$_{prog}$, Rp$_{prog}$) umfaßt, die jeweils um einen vorgegebenen Schritt in einer Weise inkrementierbar und dekrementierbar sind, daß das schrittweise Einfügen der Dämpfungszelle in das Leitungspaar ermöglicht wird.

*FIG.1*

*FIG.2*

*FIG.3*

# FIG.4

FIG.5

EP 1 003 292 B1

FIG.6

EP 1 003 292 B1

# FIG.7

EP 1 003 292 B1